**Europäisches Patentamt**

**European Patent Office**

**Office européen des brevets**

(19)

(11) Publication number: **0 125 211**
**B1**

(12)

# EUROPEAN PATENT SPECIFICATION

(45) Date of publication of patent specification: **04.03.87**

(51) Int. Cl.⁴: **B 62 D 1/18**

(21) Application number: **84830111.5**

(22) Date of filing: **12.04.84**

(54) Device for adjusting the inclination of the steering wheel of a machine, particularly a combine harvester.

(30) Priority: **04.05.83 IT 5328283 u**

(43) Date of publication of application:
**14.11.84 Bulletin 84/46**

(45) Publication of the grant of the patent:
**04.03.87 Bulletin 87/10**

(84) Designated Contracting States:
**DE FR GB**

(56) References cited:
**EP-A-0 019 571**
**DE-A-2 151 945**
**US-A-3 504 569**
**US-A-3 691 866**
**US-A-3 851 543**
**US-A-4 179 137**

(73) Proprietor: **PIETRO LAVERDA S.p.A.**
**Via Francesco Laverda 15/17**
**I-36042 Breganze (Vicenza) (IT)**

(72) Inventor: **Raineri, Giuseppe**
**Via Bellini 20**
**I-36061 Bassano del Grappa (Vicenza) (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The present invention relates to steering columns for machines, particularly combine harvesters, of the type specified in the preamble of the attached claim 1.

A steering column of this type is known from US—A—3 851 543.

The object of the invention is to provide a steering column of the above indicated type which allows the inclination of the steering wheel to be adjusted by simple and rapid operations in a safe and precise manner, and which has a simple and inexpensive structure.

According to the invention, this object is achieved by providing a steering column of the above identified type which has the features indicated in the characterizing portion of the attached Claim 1.

Further characteristics and advantages of the present invention will become apparent from the following description with reference to the appended drawings, provided purely by way of non-limiting example, in which:

Figure 1 is a side view in elevation and in section of a steering column according to the invention, and

Figures 2 to 4 are sections taken on lines II—II, III—III and IV—IV of Figure 1.

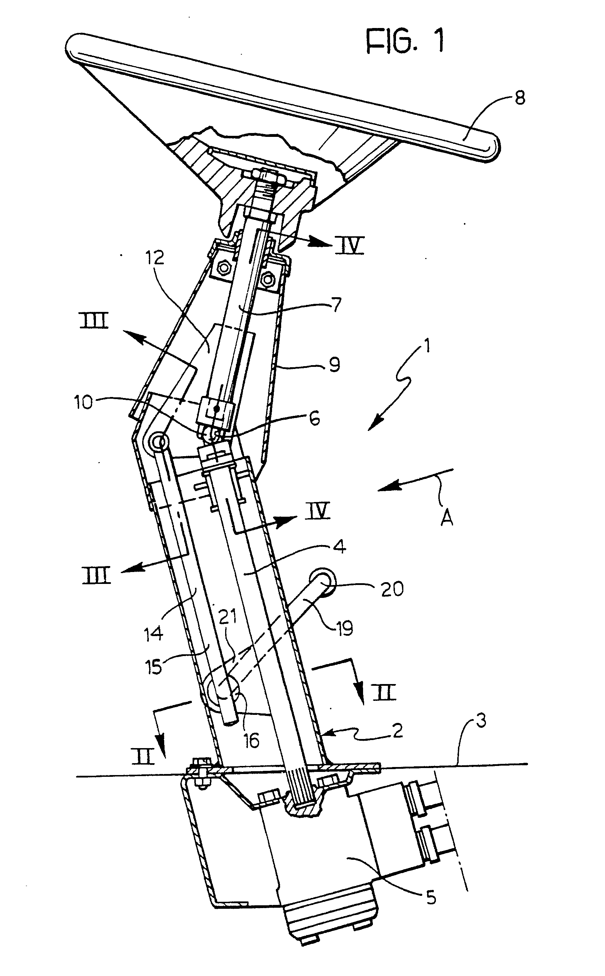

In Figure 1 a steering column for a combine harvester is generally indicated 1. This steering column 1 comprises a fixed tubular housing 2 mounted at its lower end on the floor of the driving position (indicated by reference 3).

Within the fixed tubular housing 2 is a lower shaft 4 the lower end of which is connected to a steering box 5 and the upper end of which is connected by a universal joint 6 to an upper shaft 7 carrying the steering wheel 8.

The upper shaft 7 is located within a movable housing 9 which is articulated to the fixed housing 2 about a horizontal tranverse axis 10 coincident with the universal joint 6.

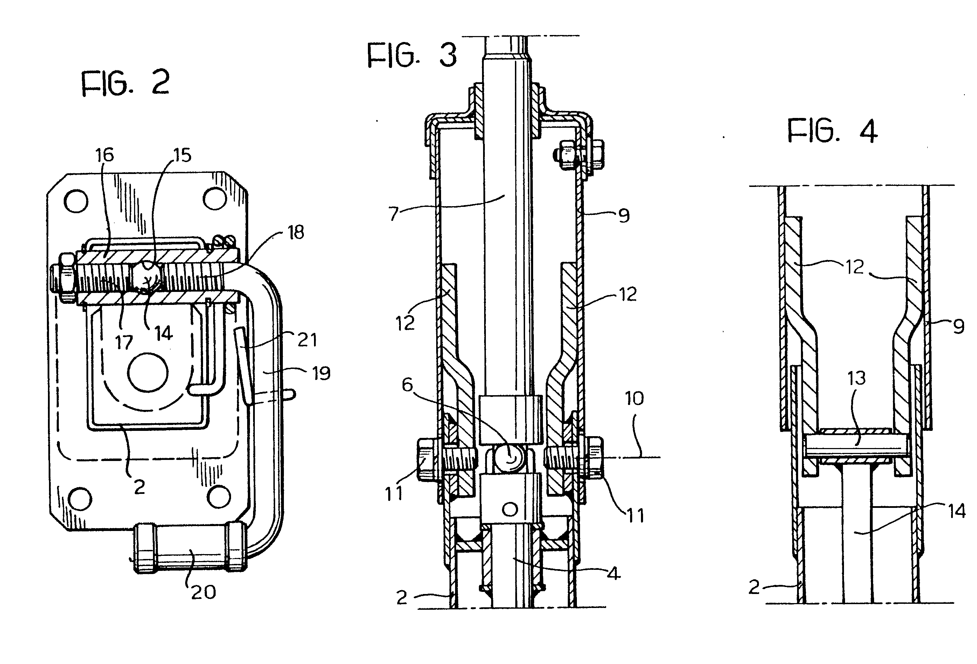

With reference to Figure 3, the articulation of the movable housing 9 to the fixed housing 2 is effected by means of two screws 11 which engage the side walls of the housing 9 and the housing 2 as well as two side plates 12 fixed to the movable housing 9 within the latter.

With reference to Figure 4, the two plates 12 are connected together by a pin 13 on which the upper end of a positioning rod 14 is articulated, the rod being disposed within the fixed tubular housing 2.

With reference to Figures 1, 2 the positioning rod 14 is seated adjacent its lower end in a vertical diametral bore 15 in a bush 16 mounted in a horizontal transverse position on the fixed tubular housing 2. The term "transverse" is intended to indicate a horizontal direction perpendicular to the direction of advance of the vehicle, which is indicated by the arrow A in Figure 1.

The bush 16 is internally threaded. The positioning rod 14 is normally clamped within the seat 15 between an adjusting screw 17 screwed into one end of the bush 16 and a threaded shank 18 screwed into the opposite end of the bush 16.

The shank 18 has a cranked arm 19 which carries a pedal 20.

Reference numeral 21 indicates a spiral spring interposed between the fixed housing 2 and the arm 19 so as to urge the pedal 20 towards a raised position corresponding to the screwed-in condition of the threaded shank 18. In this condition the positioning rod 14 is clamped within its seat 15.

When it is desired to vary the inclination of the steering wheel 8, it suffices to press the pedal 20 downwardly against the action of the spring 21 so as to cause the unscrewing of the shank 18 and consequently the disengagement of the latter from the positioning rod 14. This rod is then free to slide within its seat 15, allowing the operator to adjust the position of the steering wheel as he thinks best by acting directly thereon. Once the desired position has been reached, the operator simply releases the pedal. The spring 21 then returns the pedal to its raised position corresponding to the clamping of the positioning rod and consequently the steering wheel.

## Claims

1. Steering column for a machine, particularly a combine harvester, comprising:

— a fixed tubular housing (2),

— a lower shaft (4) rotatably mounted in the fixed tubular housing (2) and connected at its lower end to a steering box (5),

— an upper shaft connected at one end by a universal joint to the lower shaft and connected at its other end to the steering wheel,

— a movable housing (9) surrounding the upper shaft (7) and articulated to the fixed tubular housing (2) about a horizontal transverse axis (10) coincident with the universal joint (6),

— a positioning rod (14) whose position depends upon the relative position between said fixed and movable housings (2, 9),

— locking means (16, 17, 18) carried by the fixed housing (2) and arranged to lock the said rod (14) and consequently the steering wheel (8) in a predetermined position,

— resilient means (21) biassing the locking means into their locked condition, and

— means (20) for disengaging the locking means from their locked condition,

characterised in that said positioning rod (14) is located within the fixed tubular housing (2) and is connected to the movable housing (9), in that the locking means include:

— an internally threaded bush (16) mounted in a horizontal position in the fixed tubular housing (2) and having a vertical diametral passage (15) engageable by the positioning rod (14), and

— a screw threaded shank (18) screwed into the bush (16) and arranged to clamp the positioning rod (14) within said bush, against an abutment element (17), and

in that the means for disengaging the locking means are constituted by a pedal (20) connected to the screw threaded shank (18) and in that the resilient means bias the pedal (20) into a raised position corresponding to the engagement of the threaded shank (18) against the positioning rod (14).

2. Steering column according to Claim 1, characterised in that the threaded shank (18) has an arm (19) which defines the said pedal (20).

3. Steering column according to Claim 1, characterised in that the resilient means are constituted by a spiral spring (21) interposed between the fixed tubular housing (2) and the said pedal.

4. Steering column according to Claim 1, characterised in that said abutment element (17) is an adjustable screw.

## Patentansprüche

1. Lenksäule für eine Maschine, insbesondere einen Mähdrescher, mit
— einem festeingebauten rohrförmigen Gehäuse (2),
— einer unteren Welle (4), die drehbar in das festeingebaute rohrförmige Gehäuse (2) eingesetzt und an deren unterem Ende mit einem Lenkgehäuse (5) verbunden ist,
— einer oberen Welle, die an einem Ende über ein Kardangelenkt mit der unteren Welle und an deren anderem Ende mit einem Lenkrad verbunden ist,
— einem beweglichen Gehäuse (9), das die obere Welle (7) umgibt und an dem festeingebauten Gehäuse (2) um eine horizontal liegende Querachse (10), die mit dem Kardangelenk (6) zusammenfällt, schwenkbar angebracht ist,
— einer Positionierungsstange (14), deren Stellung von der relativen Stellung zwischen dem festeingebauten und dem beweglichen Gehäuse (2, 9) abhängt,
— Festhaltemitteln (16, 17, 18), die von dem festeingebauten Gehäuse (2) gehalten werden und vorgesehen sind, um die Positionierungsstange (14) und demzufolge das Lenkrad (18) in einer vorbestimmten Stellung festzuhalten,
— einem federnden Element (21), das die Festhaltemittel in deren Festhaltezustand vorspannt, und
— einem Mittel (20) zum Lösen der Festhaltemittel aus deren Festhaltezustand,
dadurch gekennzeichnet, daß die Positionierungsstange (14) innerhalb des festeingebauten rohrförmigen Gehäuses (2) angeordnet und mit dem beweglichen Gehäuse (9) verbunden ist, (9) verbunden ist,
daß die Festhaltemittel
— eine mit Innengewinde versehene Büchse (16), die in einer horizontalen Lage in das festeingebaute rohrförmige Gehäuse (2) eingesetzt ist und einen vertikalen, diametral verlaufenden Durchlaß (15) hat, in den die Positionierungsstange (14) eingreifen kann, sowie
— einen mit Schraubengewinde versehenen Schaft (18) enthalten, der in die Büchse (16) eingeschraubt ist und vorgesehen ist, um die Positionierungsstange (14) innerhalb der Büchse gegen ein Widerlagerelement (17) festzuhalten,
daß das Mittel zum Lösen der Festhaltemittel durch ein Pedal (20) gebildet ist, das mit dem mit Schraubengewinde versehenen Schaft (18) verbunden ist, und
daß das federnde Element das Pedal (20) in Richtung einer angehobenen Stellung vorspannt, die mit der Festhaltestellung des mit dem Schraubengewinde versehenen Schafts (18) gegen die Positionierungsstange (14) korrespondiert.

2. Lenksäule nach Anspruch 1, dadurch gekennzeichnet, daß der mit Schraubengewinde versehene Schaft (18) einen Arm (19) hat, der das Pedal (20) definniert.

3. Lenksäule nach Anspruch 1, dadurch gekennzeichnet, daß das federnde Element durch eine Spiralfeder (21) gebildet ist, die zwischen dem festeingebauten rohrförmigen Gehäuse (2) und dem Pedal angeordnet ist.

4. Lenksäule nach Anspruch 1, dadurch gekennzeichnet, daß das Widerlagerelement (17) eine justierbare Schraube ist.

## Revendications

1. Colonne de direction pour une machine, en particulier une moissonneuse-batteuse, comprenant:
— un carter tubulaire (2) fixe,
— un arbre inférieur (4) monté à rotation dans le carter tubulaire (2) fixe et relié à son extrémité inférieure à une boîte de direction (5),
— un arbre supérieur relié à une extrémité, par l'intermédiaire d'un joint universel, à l'arbre inférieur, et relié à son autre extrémité, au volant de direction,
— un carter mobile (9) entourant l'arbre supérieur (7) et articulé sur le carter tubulaire (2) fixe autour d'un axe transversal horizontal (10), en coïncidence avec le joint universel (6),
— une tige de positionnement (14) dont la position dépend de la position relative entre lesdits carters mobiles et fixes (2, 9),
— des moyens de verrouillage (16, 17, 18) portés par ledit carter fixe (2) et agencés de façon à verrouiller ladite tige (14) et, en conséquence, le volant de direction (8) dans une position prédéterminée,
— des moyens élastiques (21) sollicitant les moyens de verrouillage dans leur état verrouillé, et
— des moyens (20) pour libérer les moyens de verrouillage à partir de leur état verrouillé,
caractérisée en ce que ladite tige de positionnement (14) est disposée à l'intérieur du carter tubulaire fixe (2) et est reliée au carter mobile (9), en ce que les moyens de verrouillage comprennent:
— un manchon (16) taraudé intérieurement, monté dans une position horizontale dans le carter tubulaire fixe (2) et muni d'un passage diamétral vertical (15) susceptible de recevoir la tige de positionnement (14), et

— une tige filetée (18) formant vis, vissée dans le manchon (16) et agencée pour serrer la tige de positionnement (14) à l'intérieur dudit manchon contre un élément de butée (17),

et en ce que les moyens pour libérer les moyens de verrouillage, sont formés par une pédale (20) reliée à la tige filetée (18) formant vis et en ce que les moyens élastiques, sollicitent la pédale (20) vers une position relevée correspondant au serrage de la tige filetée (18) contre la tige de positionnement (14).

2. Colonne de direction suivant la revendication 1, caractérisée en ce que la tige filetée (18), comporte un bras (19) qui délimite ladite pédale (20).

3. Colonne de direction suivant la revendication 1, caractérisée en ce que les moyens élastiques, sont formés par un ressort hélicoîdal (21) interposé entre le carter tubulaire (2) fixe et ladite pédale.

4. Colonne de direction suivant la revendication 1, caractérisée en ce que ledit élément de butée (17) est une vis réglable.

FIG. 1

FIG. 2

FIG. 3

FIG. 4

0 125 211